# EUROPÄISCHE PATENTSCHRIFT

(11) **EP 3 642 087 B1**
(45) Veröffentlichungstag und Bekanntmachung des Hinweises auf die Patenterteilung: **04.10.2023**
(21) Anmeldenummer: 17768020.4
(22) Anmeldetag: 30.08.2017
(51) Int. Cl.: B60T 8/40

(54) **BREMSSYSTEM**
BRAKE SYSTEM
SYSTÈME DE FREINAGE

(30) Priorität: 20.06.2017 DE 102017113563
(43) Veröffentlichungstag der Anmeldung: 29.04.2020
(73) Patentinhaber: IPGate AG, 8808 Pfäffikon (CH)
(72) Erfinder: LEIBER, Thomas, 22203 Rogoznica (HR); LEIBER, Heinz, 71739 Oberriexingen (DE); VAN ZANTEN, Anton, 71254 Ditzingen (DE)
(74) Vertreter: Meissner Bolte Partnerschaft mbB
(86) Internationale Anmeldenummer: PCT/EP2017/071738
(87) Internationale Veröffentlichungsnummer: WO 2018/233854

(56) Entgegenhaltungen:
- WO-A1-2011/029812
- WO-A1-2012/143311
- WO-A1-2015/078651
- WO-A1-2015/173134
- WO-A1-2016/000865
- WO-A1-2016/023994
- WO-A2-2013/072198
- DE-A1-102010 003 081
- DE-A1-102013 214 212
- DE-A1-102014 109 628
- JP-A- 2015 071 382
- JP-A- 2016 147 614
- US-A- 5 051 861
- US-A1- 2003 201 669
- US-A1- 2011 285 200
- US-A1- 2012 112 525

## Beschreibung

Die Erfindung betrifft ein Bremssystem gemäß dem Oberbegriff des Patentanspruches 1.

### Stand der Technik

Der Trend zu Fahrzeugen mit autonomem Fahren (AD) bedingt für das Bremssystem einerseits hohe Anforderungen an die Fehlersicherheit und andererseits redundante Funktionen, z. B. für Bremsdruckerzeugung, Spannungsversorgung und Rechnerfunktionen (ECU). Favorisiert werden so genannte 1-Box- und 2-Box-Systeme. Letztere bestehen aus einem elektrischen Bremskraftverstärker (BKV), einem so genannten E-Booster, und einem ESP-System (englisch "Electronic Stability Control System"). Damit wird z. B. die Bremsdruckerzeugung über E-Motor und elektronische Steuer- und Regeleinheit - auch Motorsteuergerät (englisch "Electronic Control Unit" bzw ECU) - bei E-Booster und Rückförderpumpe mit E-Motor und ECU redundant.

Die bekannten Lösungen haben relativ große Baulängen und ein hohes Gewicht.

In der WO2011/098178 (nachfolgend Variante A bzw. als Folgeverstärker oder e-Booster) ist eine solche Lösung beschrieben mit koaxialem Antrieb, indem ein E-Motor über ein Getriebe und Kolben auf den HZ-Kolben (=Hauptzylinderkolben) wirkt. Die BKV-Steuerung erfolgt über ein elektrisches Glied und Reaktionsscheibe als so genannter Folgeverstärker, der Pedalweg ist eine Funktion des Bremsdruckes und der Volumenaufnahme des Bremssystems, was bei Fading oder Bremskreisausfall lange Pedalwege erfordert.

Die WO2009/065709 (nachfolgend Variante B, bzw. als Folgeverstärker oder e-Booster) zeigt einen E-Booster ebenfalls als Folge-BKV. Hier erfolgt die BKV-Steuerung über Pedalweg und Druck. Eine getrennte Druckversorgung mit E-Motor und Plunger wirkt über den Verstärkerkolben auf den HZ-Kolben.

Die WO2012/019802 (nachfolgend Variante C) zeigt eine Anordnung ähnlich WO2011/098178 mit koaxialem Antrieb, indem ein E-Motor über ein Getriebe und Kolben auf den HZ-Kolben wirkt. Hier ist eine zusätzliche Kolbenzylindereinheit eingesetzt, welche auf einen Wegsimulatorkolben (WS) wirkt. Damit ist der Pedalweg unabhängig von z. B. Fading und Bremskreisausfall. Der Aufwand und die Baulänge sind jedoch hoch.

Die DE 10 2009 033 499 (nachfolgend auch Variante D) zeigt einen Bremskraftverstärker (BKV) mit zusätzlicher ESP-Einheit mit hydraulischer Betätigung des Verstärkerkolbens und außen liegender Druckversorgung. Diese Anordnung mit vier bzw. fünf Kolben und sechs Magnetventilen (MV) ist aufwändig und in der Baulänge ungünstig. Der nicht hydraulisch wirkende Wegsimulator (WS) liegt innerhalb der dem Hauptzylinder vorgebauten Kolben-Zylinder-Einheit und kann weder gedämpft noch über ein Magnetventil (MV) geschaltet werden.

Alle o. g. Lösungen haben eine redundante Bremskraftverstärkungs (BKV)-Funktion, da bei Ausfall des BKV-Motors die ESP-Einheit mit Pumpe ähnlich den Assistenzfunktionen mit Vakuum-BKV im autonomen Fahrbetrieb die Bremsfunktion gewährleistet.

Bei Ausfall des ESP-Motors funktioniert ABS über die Möglichkeit der Druckmodulation durch den BKV-Motor wie in der WO2010/088920 der Anmelderin beschrieben. Dies ermöglicht jedoch nur eine gemeinsame Druckregelung für alle vier Räder, was keinen optimalen Bremsweg ergibt.

Alle bisher bekannten 1-Box-Systeme haben einen so genannten Wegsimulator (insbesondere für brake-by-wire) wegen der fortschrittlichen Pedalwegcharakteristik.

Als Stand der Technik kann das Dokument WO 2012/143311 A1 auch zitiert werden.

### Aufgabe der Erfindung

Ausgehend vom Stand der Technik ist es Aufgabe der vorliegenden Erfindung ein verbessertes Bremssystem anzugeben.

Insbesondere liegt der Erfindung die Aufgabe zugrunde, ein Bremssystem für den Einsatz für autonomen Fahrbetrieb (nachfolgend AD) und/oder E-Fahrzeuge/Hybridfahrzeuge mit zunehmend starker Rekuperationsleistung (Energierückgewinnung durch Bremsen über Generators/ bzw. Antriebsmotor im Generatorbetrieb) zu schaffen. Vorzugsweise wird das Gewicht veringert und/oder die Abmessungen des Systems verkleinert und/oder die Zuverlässigkeit erhöht.

Vorzugsweise soll ein kostengünstiges Bremssystem für den autonomen Fahrbetrieb geschaffen werden, das alle geforderten Redundanzen sowie sehr hohe Sicherheitsanforderung erfüllt.

### Erfindungsgemäße Lösung

Diese Aufgabe wird erfindungsgemäß mit den Merkmalen des Patentanspruches 1 gelöst.

Die Verbesserung zeichnet sich unter anderem dadurch aus, dass der Aufbau des Bremskraftverstärkers sehr wenige sowie einfache Komponenten mit geringen Toleranzanforderungen (z.B. Ventile nur im Offen/Zu-Betrieb) aufweist und damit kostengünstig ist, sehr kurz und schmal baut sowie eine konstante Pedalwegcharakteristik insbesondere bei starker Rekuperation ermöglicht.

Vorteilhafte Ausführungsformen bzw. Ausgestaltungen der Erfindung sind in den weiteren Ansprüchen, der Zeichnung und der Figurenbeschreibung enthalten, auf die an dieser Stelle verwiesen wird.

Mit der erfindungsgemäßen Lösung bzw. ihren Ausführungsformen bzw. Ausgestaltungen wird ein Bremssystem geschaffen, das eine sehr kurze Bauweise aufweist sowie eine vorteilhafte Pedalcharakteristik.

Insbesondere wird erfindungsgemäß ein 2-Box-System geschaffen, mit einem elektrischen Bremskraftverstärker der an eine Standard-ESP-Einheit über zwei hydraulische Leitungen angeschlossen wird (in folgenden X-Boost und ESP/ABS-Einheit bezeichnet, zusammen 2-Box-System), wobei der Bremskraftverstärker eine Pedalcharakteristik aufweist, welche unabhängig von der Volumenaufnahme des Bremssystems ist und Grad der Rekuperation ist.

Weiterhin wird mit der Erfindung eine kompakte Bauform des Bremskraftverstärkers mit geringem Boxvolumen erreicht, welche sehr kurz und schmal ist und viele Redundanzen, z.B. für Druckerzeugung, elektrische Versorgung, Ausfall Pumpenmotor der ESP-Einheit aufweist und auch bei Ausfall der ESP-Einheit eine ABS-Funktion mit reduzierter Leistungsfähigkeit beinhaltet. Die ABS-Funktion sollte im Notbetrieb ohne ESP zumindest eine achsweise individuelle Regelung zur Verbesserung des Bremswegs umfassen ("Select-low"-Druckregelung).

Die Einbauräume im Aggregateraum werden immer kleiner, daher sollten die Abmessungen des Bremsaggregats, insbesondere im Breiten- und Längenmaß, möglichst klein sein. Diese kompakte Bauweise ist einerseits möglich durch Entkopplung des Hauptzylinder(HZ)-Kolbens vom Motorantrieb und andererseits durch einen speziellen kurzbauenden Hauptzylinder (HZ) nach der WO2016/023994 der Anmelderin auf die hier insoweit Bezug genommen wird mit parallel angeordneter Druckversorgung (nachfolgend Druckversorgung oder DV) bestehend aus E-Motor mit Kolbenantrieb.

Die Druckversorgung (DV) wirkt nur bis zur Radblockiergrenze 80 bis 100 bar. Für höhere Drucke (z.B. bei Fahrerassistenzfunktionen) wird die Pumpe des ESP-Aggregats eingeschaltet. Dies kann bei der erfindungsgemässen Lösung im Vergleich zu Variante A des eingangs beschriebenen Standes der Technik daher realisiert werden, da die ESP-Pumpen-Funktion keinen Einfluss auf das Pedalgefühl hat, da das Bremspedal entkoppelt ist.

In der Pedalcharakteristik sollte eine Rückwirkung von der Volumenaufnahme, z. B. bei Bremskreisausfall, ausgeschlossen werden. Andererseits sollte die Möglichkeit bestehen, eine gewollte Pedalrückwirkung zu erzeugen, z. B. bei Einsatz der ABS-Funktion eine kleine Pedalbewegung, ggf. auch intermittierend. Auch können Fehler, z. B. Bremskreisausfall, durch Pedalbewegung parallel zur Warnlampe angezeigt werden.

Zum Pedalwegsimulator sind verschiedene Lösungen denkbar. Im gesamten Druckbereich ( 150 bis 200) bar soll der Pedalwegsimulator eine gute Pedalwegcharakteristik liefern, z. B. bis zu 30 bar mit flacher Kennlinie und anschließend progressiv ansteigend ohne Einfluss, ob der X-Boost oder die ESP-Einheit den Druck liefert. In der Ausführung des E-Boosters als Folgeverstärker (**Variante A** nach Stand der Technik) ändert sich beim Übergang von E-Booster zu ESP die Pedalkraftkennlinie sehr deutlich und erfordert für den hierfür notwendigen PWM-Betrieb der Ventile viel Softwareaufwand. Dies ist bei der erfindungsgemäßen Lösung nicht der Fall, da der Betrieb der ESP-Pumpe keinen Einfluss auf die Pedalcharakteristik hat, da das Pedal über den Wegsimulator entkoppelt ist.

Zur Reduzierung des Bauvolumens kann im flachen Teil der Pedalwegkennlinie die Rückstellfeder (18) eingesetzt werden, so dass das Volumen im KolbenWegsimulator kleiner ist und nur noch dem progressiven Teil der Kennlinie entspricht, wie auch in WO2013/072198 des Anmelders dargestellt, auf die insoweit hier Bezug genommen wird.

Eine weitere Möglichkeit zur Realisierung eines Pedalwegsimulators besteht in einem THZ (= Tandemhauptbremszylinder)mit Stößel ohne Kolbenwegsimulator wie dies in der WO2016/023994 der Anmelderin, auf die hier insoweit Bezug genommen wird, beschrieben bzw. dargestellt ist. Hier wirkt der vom Pedalweg abhängige Steuerdruck zum BKV auf den Stößel und erzeugt so die Pedalrückwirkung.

Abhängig von der Pedalstellung wird von dem Kolben der Druckversorgung ein Druck auf den SK-Kolben des Hauptbremszylinders (T)HZ geleitet, wodurch der Bremsdruck entsteht. Die Druckversorgung besteht aus einem E-Motor, der über eine Spindel den Kolben antreibt. Als Getriebe können sowohl ein Kugelgewindetrieb (KGT) als auch eine Trapezspindel mit Mutter eingesetzt werden. Letztere ist kostengünstiger und geräuscharm, hat aber einen schlechteren Wirkungsgrad und ist selbsthemmend. Das Letztere hat den Vorteil, dass bei Ausfall der Druckversorgung DV, z. B. des Motors, der Kolben in der Stellung verharrt, so dass keine Volumenzunahme im Bremskreis unter Bremsdruckeinfluss entsteht.

Beim Kugelgewindetrieb (KGT) muss für diesen Ausfall ein zusätzliches Schließventil eingesetzt werden. Das Ansaugen der Flüssigkeit aus dem Vorratsbehälter (VB) erfolgt über ein Saugventil oder über die Kolbenmanschettendichtung mit Schnüffelloch wie bei einem Hauptzylinder (HZ).

Der Zugang zum Kolbenwegsimulator kann mit einem Magnetventil (WA) geschlossen werden, da bei Ausfall der Druckversorgung (DV) die Pedalkraft auf den Hauptzylinder (HZ) wirkt und somit Bremsdruck in der so genannten Rückfallebene (RFE) erzeugt. Ohne das Ventil (WA) würde der Pedalweg in der Rückfallebene (RFE) durch die Volumenaufnahme des Kolbenwegsimulators (WS) verlängert werden.

Da durch die Zusammenschaltung von X-Boost und ESP-Einheit zwei redundante Systeme zur Druckerzeugung mit redundanter Spannungsversorgung vorliegen, wirkt die Rückfallebene (RFE) nur beim Abschleppen, eigentlich nur zum Tiefladen, z. B. für den Fall, dass das Getriebe des Fahrzeugs blockiert sein kann. Diese Fakten erlauben größere Freiheitsgrade in der System- und Kolbengestaltung, z. B. Einsparung eines WA-Magnetventils.

X-Boost und ESP-Einheit haben in einer Ausführungsform getrennte Spannungsversorgungen, z. B. ESP wird an 12V-Batterie angeschlossen und X-Boost an DC/DC-Konverter eines Mehrspannungsbordnetzes angeschlossen. Alternativ können sowohl X-Boost als auch ESP-Einheit sowohl an 12V-Batterie und DC/DC-Converter angeschlossen werden. Damit haben beide Module des Bremssystems der 2-Box jeweils eine redundante Stromversorgung.

Gegenüber der Variante A Stand der Technik haben einige der erfindungsgemäßen Lösungen noch weitere Vorteile:
I. Bei Bremskreisausfall gibt es keinen Pedaldurchfall;
II. Bei Ausfall ESP-Motor kann auch der Druck achsweise gesteuert werden, was eine erhebliche Bremswegverkürzung ermöglicht;
III. Viele Fahrerassistenzfunktionen sind im X-Boost umsetzbar und können mit höherer Präzision umgesetzt werden als in der ESP-Einheit; und/oder
IV. Rekuperationssteuerung ist einfacher, leiser und genauer durch Steuerung über die DV als über Einlass- und Auslassventile und der Pumpe der ESP-Einheit.

Pedaldurchfall I) kann dadurch vermieden werden, da eine Undichtheit in dem System keine Auswirkung auf das Pedalgefühl hat, da der Wegsimulator entkoppelt ist. Im Gegensatz zur erfindungsgemäßen Lösung wirkt sich z.B. bei Variante A und B eine Undichtheit im System unmittelbar auf das Pedalgefühl aus, sodass im schlimmsten Fall sich plötzlich der Pedalweg verlängert und die Veränderung vom Fahrer nicht beherrschbar ist und zu Unfällen führt.

Die individuelle Druckregelung II) von Achsen ist durch die erfindungsgemäße Lösung dadurch möglich, weil bei Ausfall des ESP-Motors der E-Motor der Druckversorgung DV des X-Boost die Druckregelung übernimmt und die Druckregelung keinen Einfluss auf das Pedal hat. Dadurch gibt es im Gegensatz zu Folgeverstärkerlösungen (Variante A und B) wesentlich mehr Freiheitsgrade . Dazu wird die Drucksteuerung der Erfindung über den Kolbenweg und Motorstrom gemäß (DE 10 2005 018649 der Anmelderin) und Druckgradientenregelung (DE 10 2005 055751 der Anmelderin), auf die hier insoweit Bezug genommen wird, für eine hochpräzise Drucksteuerung eingesetzt, die mit Pulsweiten-Modulation- (PWM) -Steuerung von Ventilen der ESP-Einheit nicht erreicht werden kann.

Die Systementkopplung (Pedal vom System) hat auch bei der Umsetzung von III) Fahrerassistenzfunktionen eine hohe Bedeutung, wie weiter unten näher beschrieben ist.

Der Rekuperationssteuerung (IV) kommt durch die zunehmende Hybridisierung und Verbreitung von E-Fahrzeugen eine zunehmende Bedeutung zu. Abhängig von der möglichen Generatorbremswirkung und der geforderten gesamten Bremswirkung vom Fahrer wird der Bremsdruck variiert. Man spricht hier vom Bremsdruck-Blending.

Die Rekuperationssteuerung (IV) bei einer der erfindungsgemäßen Lösungen wird z.B beim 4-Rad-Blending ausschließlich über die Kolbenwegsteuerung der Druckversorgung DV durchgeführt. Entsprechend der Verzögerungswirkung des Generators des Fahrzeuges oder im Generatorbetrieb betriebenen Antriebmotors eines E-Fahrzeuges wird ein entsprechender Bremsdruck eingestellt durch Verstellung des Kolbens, damit die Summe der hydraulischen Bremskraft und der Bremswirkung durch den Antriebsmotor die gewünschte Gesamtverzögerungskraft ergibt.

Dies ist völlig variabel möglich, da die Druckstellung der Druckversorgung DV des X-Boost keine Auswirkung auf das Pedalgefühl hat. Dies hat erhebliche Vorteile insbesondere gegenüber der Variante A und B des Standes der Technik, bei der durch die Kopplung zwischen Pedal und HZ-Volumen in die Speicherkammern der ESP-Einheit abgelassen werden muss, um bei gleichbleibenden Pedalgefühl eine reduzierte Verzögerung zu erzielen. Dafür ist ein Eingriff in ESP erforderlich und eine sehr aufwändige Steuerung der Auslassventile der ESP-Einheit erforderlich. Zudem können bei einigen der erfindungsgemäßen Lösungen unterschiedliche ESP-Varianten für unterschiedliche Bremskreisverteilung (diagonal und parallel/achsweis Bremskreise, Heck- und Frontantriebe) vermieden werden, da die Steuerung ausschließlich über den Kolben erfolgt, unabhängig von der Bremskreisaufteilung und der Antriebsart. Insbesondere ergeben sich auch folgende Vorteile des X-Boost bei der RekuperationEingie der erfindungsgemäßen Lösungsansätze weisen gegenüber dem Stand der Technik folgende Vorteile im Pedalgefühl auf:
- Keine Änderung im Pedalgefühl durch Blending
- Keine Änderung im Pedalgefühl durch Änderungen im Bremssystem (z.B. Änderungen im Bremslüftspiel, Änderungen in der PV-Kennlinie)

Beim Blending ergeben sich zusammenfassend folgende Vorteile:
- Präzise Einstellung der Bremsdrücke, auch bei schnellen Änderungen des Drehmomentes des Generators => Einfache Punktbremsungen;
- Keine wahrnehmbare Geräusche, z.B. durch Schalten von Ventilen in der ESP-Einheit;
- Blending im gesamten Fahrzeugverzögerungsbereich;
- Erheblich einfachere Software für Blending als beim herkömmlichen E-Booster;
- Bremskraftverteilung beliebig darstellbar, bis zur Radblockiergrenze. Dadurch sind ESP-Eingriffe zur Fahrzeugstabilisierung, vor allem auf rutschigen und unebenen Fahrbahnen, und Unterbrechungen der Rekuperation mit komplexer Umschaltung von Rekuperation zur rein hydraulischen Bremsung und umgekehrt, vermeidbar;
- Änderungen an den Rad-Bremsen (z.B. Druck-Volumen-Kennlinien oder p-V-Kennlinien) an der nicht angetriebenen Achse haben keinen Einfluss auf die hydraulische Bremsung;
- Keine zusätzlichen Komponenten zur Aufnahme von Hydraulikflüssigkeit erforderlich (z.B. kein "smart actuator");
- Keine härtere Rückstellfeder für das Pedal erforderlich (wichtig für Pₘₐₓ in der RFE); und/oder
- Änderungen in der PV-Kennlinie des Bremssystems werden diagnostiziert.

In bekannten Systemen nach Variante A mit Folgeverstärker ist der Pedalweg eine Funktion der Volumenaufnahme. Damit die Pedalwege im Normalbetrieb nicht groß werden, ist eine angepasste Dimensionierung des Hauptzylinders HZ für unterschiedliche Fahrzeugtypen mit unterschiedlich großem Kolbendurchmesser erforderlich. Dies führt bei Systemausfall in der Rückfallebene RFE bei gleichem Pedalweg zu hohen Pedalkräften bei Bremsanlagen mit größerer Volumenaufnahme. Entsprechend den Vorschriften der ECE-13H ist bei einer maximalen Fußkraft von 500 N eine Fahrzeugverzögerung von mindestens 0,24-0,3 g vorgeschrieben.

Einige der erfindungsgemäßen Lösungen ermöglichen den Einsatz eines kleinen Hilfskolbendurchmessers im Vergleich zum SK-Kolben und damit höhere Bremsdrücke in der Rückfallebene RFE bei 500 N Fußkraft. Weiterhin kann bei Bremsfading das Volumen in den Bremskreisen noch erhöht werden, indem die DV nachfördert. Dieses zusätzliche Volumen muss von dem SK-Kolben in den Schwimmkreis übertragen werden können, entweder durch einen größeren Durchmesser des SK-Kolbens als der Hilfskolben oder durch einen größeren Hub des SK-Kolbens.

Die Steuerung des BKV erfolgt in einer Ausführungsform gemäß DE 10 2005 018649 und DE 10 2005 055751 der Anmelderin, auf die hier insoweit Bezug genommen wird, über den Kolben der Druckversorgung DV, indem über eine BKV-Kennlinie als Funktion des Pedalwegs ein Druck im Bremskreis eingesteuert wird. Der Druck wird im ESP-Gerät gemessen und von der Druckversorgung DV über einen entsprechenden Kolbenweg bereitgestellt. Bei Drucksensorausfall steht dieses Drucksignal nicht zur Verfügung. Der Drucksensorausfall wird von der Druckversorgung DV erkannt über Auswertung der Druckvolumenkennlinie (p-V-Kennlinie). Hier fehlt zum Kolbenweg der entsprechende Druckwert.

Hier kann auch als Ersatz der Druckmessung die Strommessung des DV-Motors eingesetzt werden. Generell ist auch denkbar, nur die Strommessung einzusetzen. Für die entsprechende Genauigkeit für Druckaufbau und -abbau muss in die Kennline der Druckversorgung DV (Kolbenweg und Druck alternativ Strom) die Hysterese durch die Reibungskräfte im Antrieb mit eingerechnet werden, ggf. mit Korrekturwerten, z. B. durch Korrelation des Stroms mit der Fahrzeugverzögerung.

### Beschreibung der Figuren:

Weitere Merkmale und Vorteile der Erfindung ergeben sich aus der nachfolgenden Beschreibung von Ausführungsbeispielen der Erfindung und ihren Ausgestaltungen.

Es zeigen:
- Fig. 1:: Gesamtsystem X-Boost mit ESP;
- Fig. 1a:: Hauptzylinder THZ mit Druckversorgung DV und Kolbenwegsimulator KS;
- Fig. 1b:: eine beispielhafte Detailausführung der ersten Kolben-Zylinder-Einheit;
- Fig. 2:: Pedalcharakteristik;
- Fig. 3:: Hauptkomponenten des Systems.

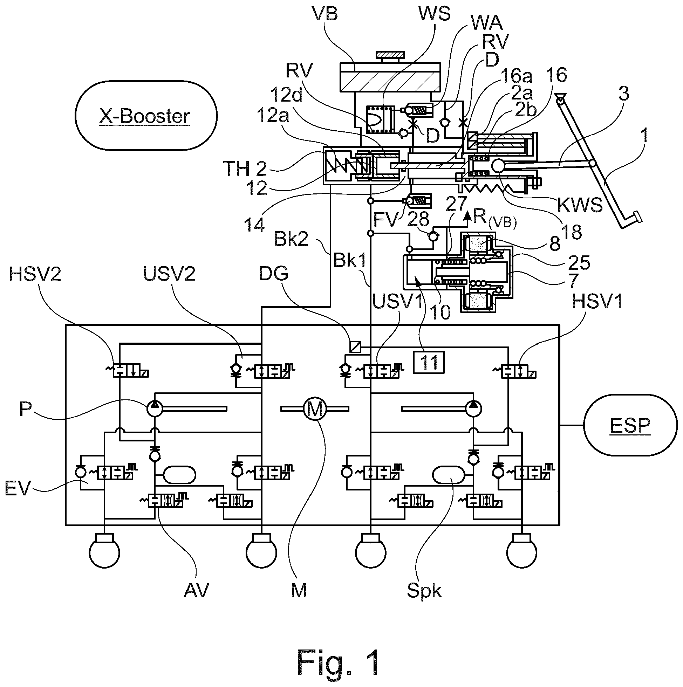

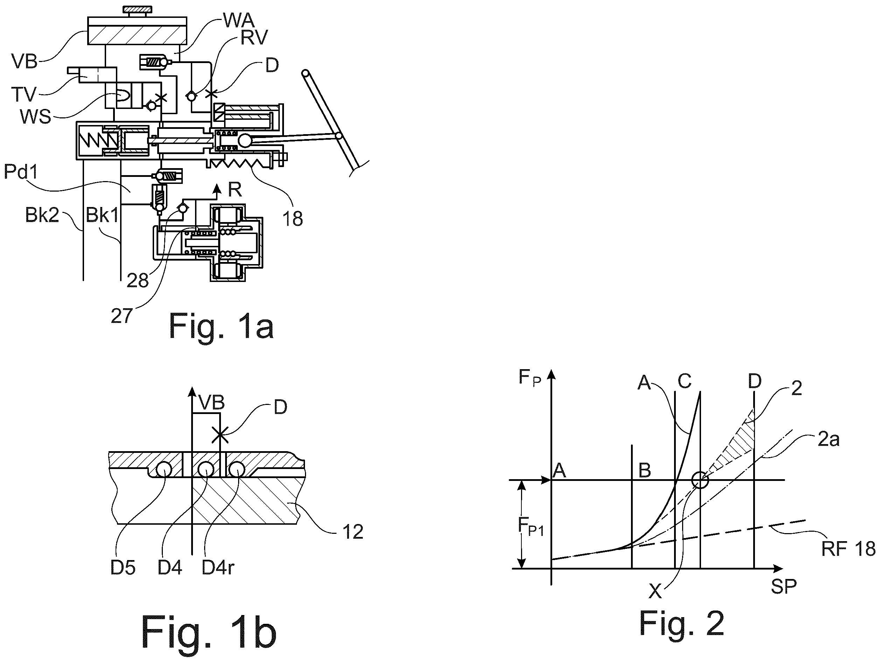

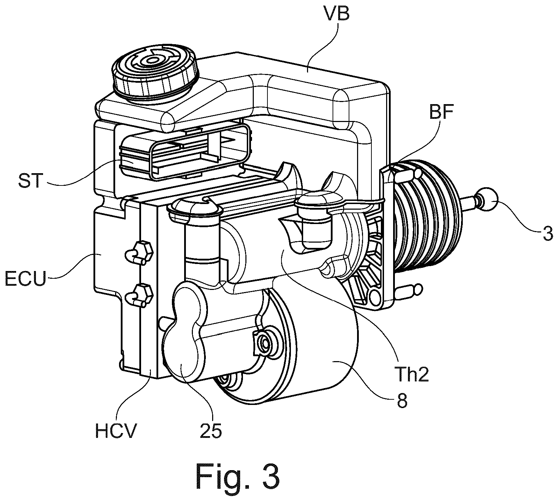

**Fig. 1** zeigt ein Prinzipschaltbild des Bremssystems mit einer Betätigungseinrichtung, insbesondere Bremspedal 1, einer ersten Kolben-Zylinder-Einheit THZ, die mittels der Betätigungseinrichtung betätigbar ist, einer zweiten Kolben-Zylinder-Einheit mit einem elektromotorischen Antrieb und einem Getriebe (nachfolgend auch X-Boost bzw. Verstärker) und einer ABS/ESP-Einheit. Die ABS/ESP-Einheit ist bekannt mit den Hauptkomponenten Pumpe P mit Motor M, den Ventilen HSV1 und HSV2, USV1 und USV2, den Radbremsen zugeordnete Einlass- und Auslassventile EV und AV, und Speicherkammer (SpK). In vielen Publikationen und Patentanmeldungen ist dieses System beschrieben. Es ist bereits als E-Booster auf dem Markt und wird vor allem in E- und Hybrid-Fahrzeugen eingesetzt, weil hier die Steuerung des Bremssystems in Zusammenwirken mit dem Bremsmoment des Generators, d. h. Rekuperation erfolgt. Hier können bekanntlich sowohl der E-Booster als auch die Elemente des ESP mitwirken, insbesondere bei der Pedalcharakteristik. Ein weiteres Einsatzgebiet sind Fahrzeuge mit autonomem Fahren. Hier steht die Fehlersicherheit und Redundanz der Funktionen im Vordergrund, wie z. B. Druckversorgung und ABS-Funktion. Der Hauptunterschied im Systemaufbau liegt bei dem neuen Konzepts X-Boost. Dieser besteht aus einem speziellen Hauptzylinder HZ mit Wegsimulator WS und Druckversorgung DV, welche parallel oder senkrecht zum Hauptzylinder HZ angeordnet ist, um eine kurze Baulänge zu erzielen, siehe auch Fig. 3.

Der Hauptzylinder HZ besteht im Wesentlichen aus einem Hilfskolben (HiKo) 16 und einem Schwimmkolben (SK-Kolben) 12 mit Rückstellfeder 12a. Der Hilfskolben 16 ist mit einem Stößel 16a verbunden, welcher durch eine Trennwand 14 mit Dichtung in den Druckraum 12d wirkt. Von Stößelende zu SK-Kolben ist ein Abstand von ca. 50 % des Hubes des Hilfskolbens (HiKo) 16. Der Stössel (16a) hat eine signifikant kleinere Querschnittsfläche als die Kolben der ersten Kolben-Zylinder-Einheit (> Faktor 5 kleiner) und trägt unwesentlich zum Druckaufbau bei und zur Drucksensierung im Bremskreis dient und diese Kraft auf das Bremspedal überträgt und somit eine haptische Rückmeldung auf das Bremspedal insbesondere beim ABS-Betrieb und/oder Fading erzeugt.

Im Normalfall wird zu Beginn der Bremsung ein Ventil FV geschlossen, und der Hilfskolben HiKo wirkt auf den Wegsimulator WS, dessen Funktion und Varianten später beschrieben werden. Der Hilfskolben HiKo hat zwei Funktionen: für den Normalbetrieb und für eine Rückfallebene bei Ausfall der Druckversorgung DV. Im ersten Fall, der Normalbetrieb, speist er den Wegsimulator WS bei geschlossenem Ventil FV, und der Pedalweg ist das Eingangssignal für die Druckversorgung DV. In der Rückfallebene, bei Ausfall der Druckversorgung DV, speist er auch den Wegsimulator WS bei geschlossenem Ventil FV, jedoch ist der Pedalweg nun das Eingangssignal für den ESP-Booster.

Bei Betätigung des Bremspedals 1 mit Pedalstößel 3 werden gleichzeitig redundante Pedalwegsensoren 2a / 2b aktiviert. Diese können zusätzlich über ein elastisches Glied KWS entkoppelt werden, wie dies in der DE 11 2011 103274 der Anmelderin, auf die hier insoweit Bezug genommen wird, beschrieben ist.. Vorteile sind einerseits Erkennung wenn der Hilfskolben (HiKo) 16 blockiert ist, und andererseits liefert der Differenzweg der Sensoren bei blockiertem Hilfskolben (HiKo) 16 ein Steuersignal für eine Hilfsbremsung. Das elastische Glied kann auch Bestandteil der Federcharakteristik des Wegsimulators WS sein. Der Der Hilfskolben (HiKo) 16 hat eine normale Schnüffelbohrung eines THZ-Kolbens, die mit dem Vorratsbehälter VB verbunden ist. Bekanntlich fällt ein Bremskreis aus bei Ausfall der Primärdichtung. Dies kann vermieden werden durch Einsatz eines Rückschlagventils RV, welches zum Entlüften gebraucht wird und einer Drossel in der Verbindungsleitung zum VB. Die Drossel ist so dimensioniert, mit kleiner Durchflussmenge, dass die Pedalcharakteristik bei Ausfall der Dichtung nicht wesentlich verändert wird (3 mm Pedalweg in 10 s) und noch diagnostiziert werden kann. Dieselbe Anordnung kann auch beim Schwimmkolben (SK) 12 eingesetzt werden (nicht eingezeichnet), welche den Ausfall beider Dichtungen unkritisch macht. Alternativ kann auch in der Rückführleitung ein stromlos offenes Magnetventil eingesetzt werden, welches nach Pedalbetätigung oder Diagnose schliesst. Diese gilt für beide Kolben des HZ (Hilfskolben HiKo und den zweiten Kolben SK).

Der Wegsimulator WS kann verschieden ausgestaltet werden. Die gezeichnete Gestaltung entspricht dem Stand der Technik, der in verschiedenen Patentanmeldungen beschrieben ist, bestehend aus einem WS-Kolben mit Federkombinationen, welche als Funktion des Pedalhubs die Pedalwegcharakteristik ergeben. Das Ventil RV dient hierbei zum schnellen Druckabbau P_{ab} aus dem Wegsimulator WS, falls das Pedal sehr schnell gelöst wird, und die Drossel D zum gewünschten gedrosselten Druckaufbau P_{auf} mit der entsprechenden Pedalcharakteristik. Zusätzlich kann der Wegsimulator WS über das Ventil WA abgeschaltet werden. Dies ist notwendig bei nicht redundanten Systemen in der Rückfallebene (RFE), damit das Aufnahmevolumen des Wegsimulators WS das Fördervolumen des Hilfskolbens HiKo zum Bremskreis BK1 und Druckraum 12d nicht beeinträchtigt. Bei diesem System (Fig. 1) wirkt bei Ausfall des X-Boost das ESP redundant, bei dem die ESP-Pumpe über den Hauptzylinder THZ und die Druckversorgung DV Volumen aus dem Vorratsbehälter ansaugt. Somit kann auf das Ventil WA verzichtet werden. Eine weitere Version wird in Fig. 1a beschrieben. Der Hilfskolben (HiKo) 16 mit Pedalstößel 16a wird von der Pedalrückstellfeder 18 nach Bremsbetätigung in die Ausgangsstellung bewegt.

Zur BKV-Funktion wird die Druckversorgung bzw. DV benötigt. Diese besteht aus einem EC-Motor 8, welcher über eine Spindel 7 und Mutter einen Kolben 10 bewegt und Druckmittel in den Bremskreis BK1 und in den Druckraum 12d fördert. Die Bemessung des Volumens wird aus der BKV-Steuerung abgeleitet, welche aus Pedalweg 2a / 2b über die BKV-Kennlinie einen Druck einsteuert, der vom Druckgeber DG im ESP gemessen wird. Alternativ kann anstelle des Druckes auch der Motorstrom, über einen Shunt gemessen, eingesetzt werden. Zur Verbesserung der Genauigkeit der Drucksteuerung über die Strommessung benötigt dieser die Erfassung der Reibungsverluste im P_{auf} und P_{ab} in einem Kennfeld, ggf. zusätzlich verbessert durch Korrekturfaktoren, z. B. durch Vergleich mit der Fahrzeugverzögerung. Dies wird vor allem wichtig, wenn beim Spindelantrieb nicht ein Kugelgewindetrieb KGT, sondern eine Trapezspindel mit z. B. Kunststoffmutter eingesetzt wird.

Der Kolben 10 hat in der Ausgangsstellung ein Schnüffelloch 27 wie beim Hauptzylinder THZ. Das Ansaugen des Volumens kann über die Manschetten erfolgen oder über ein Saugventil (SV) 28, welches einen geringeren Unterdruck zum Öffnen braucht und temperaturunabhängig ist.

Bei Verwendung eine Trapezspindel verharrt infolge der Selbsthemmung der Kolben in der Stellung, bei der der Motorantrieb nicht mehr wirkt.

Die Dimensionierung der Druckversorgung DV kann so gestaffelt werden, dass der Vollhub des DV-Kolbens der Volumenaufnahme von Bremskreis BK2 bzw. des Hubes vom SK-Kolben 2 entspricht. Für größere Volumenaufnahmen kann der SK-Kolben größer im Durchmesser und auch im Hub gestaltet werden. Die Druckversorgung DV wiederum kann im Volumen (Kolben und Hub) dementsprechend oder kleiner gestaltet werden, indem das fehlende Volumen durch Nachfördern mit Kolbenrückhub über das Saugventil SV ermöglicht wird. Hierzu ist ein stromlos geschlossenes Magnetventil PD1 erforderlich, welches in Fig. 1 nicht eingezeichnet ist (siehe Fig. 1a). Zum vollen Volumenausgleich bei Druckabbau P_{ab} muss der Kolben in die Ausgangsstellung mit offenem Schnüffelloch bewegt werden. Das Saugventil 28 und das Schnüffelloch 27 sind mit dem Rücklauf zum VB verbunden. Alle Komponenten der Druckversorgung DV sind in einem Gehäuse 25 zusammengefasst.

Der Druckaufbau P_{auf} und Druckabbau P_{ab} im Bremskreis BK1 und Bremskreis BK2 erfolgt über die BKV-Steuerung und Pedalwegsensoren, und dementsprechend bewegt sich der Kolben der DV. Im Normalfall fördert der X-Boost Volumen in die Bremskreis BK bis zur Blockiergrenze 80-120 bar. Bei höheren Drücken wird die ESP-Pumpe eingeschaltet und erzeugt einen Druckaufbau auf ca. 200 bar mit entsprechend geringerer Leistung und somit langsamer als der Druckaufbau mit dem X-Boost. Dies ist zulässig, da der Druckaufbau bis 200 bar nur für Fading-Fälle relevant ist und nicht so schnell erfolgen muss wie der Druckaufbau bis zum Bockiergrenze (z.B. für die Umsetzung von Notbremsfunktionen) Die ESP-Pumpe wird somit auf 200 bar aufgelegt, der X-Boost auf 80-120 bar.

Fällt die Druckversorgung DV während eines Bremsvorgangs aus, dann wird der DV-Kolben unter Druck im Bremskreis BK1 zurückgedrückt, so dass der Bremsdruck komplett abgebaut werden kann. Wird ein selbsthemmendes Getriebe für den DV-Kolben verwendet (Trapezspindel mit Kunststoffmutter), so ist ein derartiger Druckabbau nicht möglich. Für diesen Fall ist ein stromlos geschlossenes Magnetventil AV in Bremskreis BK1 mit Verbindung zum Vorratsbehälter vorgesehen (nicht eingezeichnet) oder in Verbindung vom Schnüffelloch des Hiko zum Vorratsbehälter VB.

Bei Ausfall beider elektronischen Steuer-bzw- Regeleinheiten (ECU) vom X-Boost und ESP, was sehr selten vorkommt, wird in der Rückfalleben RFE vom Hilfskolben (HiKo) 16 Volumen durch das geöffnete Ventil FV in den Bremskreis BK1 und in den Hauptzylinder HZ auf der Rückseite des SK-Kolbens gefördert und der Bremsdruck erhöht, wobei der Bremsdruck imHauptzylinder HZ den SK-Kolben verschiebt und den Druck in Bremskreis BK2 erhöht. Damit dieses Volumen nicht durch das geöffnete Schnüffelloch der DV entweicht, ist ein stromlos geschlossenes Magnetventil PD1 vorgesehen (in Fig. 1 nicht eingezeichnet, siehe Fig. 1a).

### Funktion bei Bremskreis (BK)-Ausfall

Der Ausfall von einem Bremskreis wird von der Druckversorgung DV erkannt durch Vergleich der p-V-Kennlinie des Bremssystems, welche in gewissen Abständen im Rahmen eines Diagnosezyklus in einem Kennfeld abgelegt ist. Wenn z. B. der Kolbenhub / Volumen größer als der Normwert ist, ist entsprechend Luft im Bremskreis BK oder ein Leck. Dies kann über die p-V-Kennlinie identifiziert werden. Bei Leck kann durch nacheinander Schließen von den 4 Ventilen EV das Leck identifiziert werden, sofern sich dieses außerhalb der Aggregate z. B. im Radzylinder befindet. Ist dies z. B. im Bremskreis BK1 der Fall, so werden die Ventile EV des Bremskreises BK1 geschlossen. Die Druckversorgung DV wirkt dann über den SK-Kolben in den Bremskreis BK2 (entsprechende Beschreibung der Diagnoselogik in den Patentanmeldungen DE 10 2015 106 089.2 und 10 2016 112 971.2, auf die hier insoweit Bezug genommen wird). Wirkt dies nicht, so erfolgt ein Ausfall der Druckversorgung DV, damit auch der Bremskraftverstärkung BKV. In diesem Fall wirkt dann die ESP-Pumpe als Bremskraftverstärker BKV im Bremskreis BK2.

Ausfall von Bremskreis BK2 hat keinen Ausfall der Druckversorgung DV zur Folge, da der Schwimmkolben SK ein wichtiges Sicherheitstor mit Trennung der Bremskreise BK1 und BK2 darstellt.

In beiden Fällen bleibt die Pedalcharakteristik erhalten und es erfolgt kein Pedaldurchfall.

### ABS-Funktion bei Ausfall der Pumpe / Motor bei ESP.

Wenn das ABS-Signal zum Druckabbau P_{ab} erfolgt, korrigiert die DV-Steuerung den Bremsdruck, um ein Blockieren der Räder zu verhindern. Ein entsprechender Druckabbau P_{ab} in beiden Bremskreisen ist notwendig, um das Blockieren eines Rades aus einem der beiden Bremskreise zu verhindern. Das bedeutet aber keine optimale Bremswirkung. Dies kann aber verbessert werden.

Zum Beispiel kann beim Radblockieren mit entsprechendem Druckabbau P_{ab} in einem Bremskreis der andere Bremskreis durch Schließen des Ventils USVs kein Druckabbau P_{ab} erfahren. Dies kann optimiert werden mit individueller Radregelung durch Modifikation der Ventile EV ohne paralleles Rückschlagventil RV wie in der Patentanmeldung DE 11 2009 004636 (E112) auf die hier insoweit Bezug genommen wird) beschrieben.

**Fig. 1a** zeigt die Hauptzylinder (HZ)-Anordnung von Fig. 1 mit Änderungen in der Wegsimulator WS-Ventilschaltung. Der Wegsimulator WS hat das stromlos geschlossene WA-Ventil als Bypassventil. Der Kolben-WS hat entsprechend Fig. 2 die Aufgabe entsprechend der Pedalcharakteristik, ein Volumen mit einer entsprechenden Gegenkraft (Druck) auf den Hilfskolben (Hiko) 16 aufzunehmen, was Kosten und Baugröße verursacht. Die Pedal- und WS-Charakteristik ist im unteren Druckbereich flach. Es bietet sich an, hier die Rückstellfeder 18 zu verwenden, was ca. 40 % des Volumens des WS ausmacht, dementsprechend wird der WS-Kolben kleiner. Das Ventil WA wird bei Beginn der Bremsung geöffnet. Dies hat zur Folge, dass nach einem bestimmten Pedalhub nach Ende von Bereich A (siehe Fig. 2) das Ventil WA geschlossen wird, damit der progressivere Teil B + C eingeschaltet wird.

Die Druckversorgung DV hat hier ein zusätzliches stromlos geschlossenes Magnetventil PD1. Dieses ist notwendig, wenn in der Rückfallebene RFE der DV-Kolben unter Druck zurückgeschoben wird und dem Bremskreis BK1 und BK2 das entsprechende Volumen verloren geht. Dies kann zwar durch das große Volumen des Hilfskolbens HiKo kompensiert werden, was aber eine negative Auswirkung auf die Pedalcharakteristik hat. Gerät der DV-Kolben in die Ausgangsstellung, dann öffnet das Schnüffelloch, und Bremsflüssigkeit fließt ab in den Vorratsbehälter. In der Rückfallebene RFE wird das Ventil PD1 geschlossen. Bei ESP-Eingriffen bzw. ESP-Boost kann das Ventil PD1 wieder geöffnet werden.

In dem Bereich A (Fig. 2) kann während der Bremsung nicht entdeckt werden, ob das Ventil WA eine Leckage aufweist. Deshalb ist eine regelmäßige Diagnose vorgesehen, z.B. am Ende der Bremsung, bei der die Druckversorgung DV durch die geöffneten Ventile PD1 und FV den Raum des Hilfskolbens mit Druck beaufschlagt. Das Ventil leckt nicht, wenn bei konstanter Position des DV-Kolbens der Druck nicht kleiner wird.

Wenn während der Bremsung die ECU des X-Boosts ausfällt, dann muss der ESP-Booster die Funktion der Bremskraftverstärung BKV übernehmen. Dazu muss das ESP Volumen aus dem Vorratsbehälter VB ansaugen können und am Ende der Bremsung wieder an den Vorratsbehälter VB abgeben können. Bei ECU-Ausfall ist das Ventil PD1 aber geschlossen, so dass die Verbindung zwischen ESP und Vorratsbehälter VB durch das Schnüffelloch der Druckversorgung DV unterbrochen ist. Bei redundanter Stromversorgung der ECU wird dieser Ausfall sehr selten vorkommen. Ist die ESP-Booster trotzdem erforderlich, so kann ein stromlos geschlossenes Magnetventil (nicht eingezeichnet) zwischen Bremskreis BK1 und Vorratsbehälter VB vorgesehen werden (Ventil AV, siehe Beschreibung von Fig.1).

In einem Ausführungsbeispiel ist im Zylinder des Schwimmkolbens SK 12 eine Dichtung D4 angordnet.

**Fig. 1b** zeigt ein weiteres Ausführungsbeispiel des Zylinders, in dem beim Schwimmkolben SK 12 eine weitere Dichtung D4r als Redundanz zur Dichtung D4 vorgesehen ist. Fällt diese Dichtung aus, so folgt ein Ausfall des Bremskreises BK1 und der Druckversorgung DV. In diesem Fallübernimmt die ESP-Einheit die Aufgabe der Druckversorgung, d.h. Druckverstärkung. Dies kann vermieden werden durch die weitere Dichtung D4r deren Verbindung zum Vorratsbehälter wie beim Hillfskolben (HiKo) 16 mit einer Drossel versehen wird. Ein Ausfall dieser Dichtung hat bei dem geringen Leckfluss durch die Drossel keinen Ausfall des Bremskreises BK1 bzw. der Druckversorgung DV zur Folge. Ausserdem ist mit dieser Anordnung vorteilhaft eine Diagnose möglich.

**Fig. 2** zeigt die Pedalcharakteristik über dem Pedalweg S_{P}. Im Bereich A verläuft der Kraftanstieg mit Kurve 1 relativ flach bis ca. 30 bar Bremsdruck, was ca. 85 % aller Bremsungen entspricht. Dieser Verlauf kann auch über die Pedalrückstellfeder erfolgen. Anschließend wirkt der progressivere Teil B bis zur Blockiergrenze, danach kommt der Bereich höherer Drücke, z. B. bei Fading. Hier soll der Fahrer auch spüren, dass eine Veränderung im Bremssystem stattfand.

Kurve 1 entspricht dem X-Boost mit Wegsimulator WS. Ohne WS, d.h. mit Folgeverstärker, ergibt sich Kurve 2, bei der der Pedalweg abhängig vom Entlüftungszustand oder Fading ist. Dementsprechend ist eine nicht dargestellte Streuung zu 2a vorhanden, bei Bremskreis (BK)-Ausfall noch extremer. Beim herkömmlichen e-Booster erfolgt bei x eine Umschaltung des BKV von E-Booster auf ESP-Booster. Hierbei ändert sich die Pedalcharakteristik. Ohne Einfluss auf die BKV-Steuerung würde bei gleichem Druck und Pedalkraft das Pedal mit Hauptzylinder (HZ)-Kolben weiteres Volumen zur ESP-Pumpe fördern, bis der Druck in den Radzylindern ihre Zielwerte erreicht haben, und das Volumen durch überströmen der Ventile USVs wieder dem Hauptzylinder HZ zurückgeführt wird.

Eine geänderte Pedalcharakteristik bei größerem Pedalweg wird hier durch Reduzierung des Verstärkungsfaktors des X-Boost erzielt, was das skizzierte Streuband zur Folge hat. Zusätzlich können noch die Ventile HSV1 und HSV2 moduliert werden.

Hier verhält sich der erfindungsgemäße x-Boost mit Wegsimulator WS wie Kurve A mit entsprechend progressivem Kraftanstieg als Funktion des Pedalhubes.

### Pedalrückwirkung bei ABS

Bei der ABS-Funktion ändert sich der von der DV gelieferte Vordruck ständig. Dies ist als kleine Kraftänderung am Stößel 16a und damit am angekoppelten Pedalstößel 3 spürbar, was von vielen Bremsenfachleuten gefordert wird. Dies kann zu Beginn der ABS oder intermittierend während der Abbremsung geändert werden durch kurzzeitig höhere Vordruckänderung.

Sollte die Rückwirkung deutlicher spürbar werden, so kann das FV-Ventil öffnen, und der Steuerdruck der DV wirkt direkt auf den Hilfskoleben HiKo.

### Rekuperation mit Wegsimulator WS

Die Pedalcharakteristik bestimmt der Wegsimulator WS. Das Bremsmanagement mit Generator bestimmt hier für die geforderte Fahrzeugverzögerung jeweils den Anteil von Generator -Bremsmoment (elektrisches Bremsmoment) und Bremsdruck (hydraulisches Bremsmoment). Beide Größen können beliebig während einer Abbremsung geändert werden. Die Berechnung des Bremsdrucks bei einer Rekuperation ist vorzugsweise Radkraft basiert. Aus dem Pedalweg wird die erforderliche Gesamtbremskraft (Soll-Bremskraft) an den Rädern bestimmt. Wenn die Soll-Bremskraft elektrisch aufgebracht werden kann, dann ist die hydraulische Bremskraft 0N (Bremsdruck in den Radzylindern 0bar). Übersteigt die Soll-Bremskraft die maximal mögliche elektrische Bremskraft, so ist die Differenz zwischen der Soll-Bremskraft und der elektrischen Bremskraft die hydraulische Soll-Bremskraft. Die hydraulische Soll-Bremskraft wird von der Druckversorgung DV durch Druckerzeugung in den Radzylindern realisiert. Dazu werden die individuellen Cp-Werte der Radbremsen verwendet, um den Soll-Bremsdruck zu berechnen, wobei der Cp-Wert einer Radbremse das Verhältnis von Bremskraft zu Bremsdruck darstellt. Der Solldruck wird durch eine entsprechende Bewegung des DV-Kolbens erzeugt, wobei der Drucksensor des ESP für die Rückkoppelung der Kolbenbewegung verwendet wird. Auf dieser Weise kann die Druckversorgung DV sowohl beim Druckaufbau als auch beim Druckabbau den Solldruck einstellen. Durch die genaue Positionsregelung des DV-Kolbens ist die Druckeinstellung sehr genau. Weiter ist die Drucksteuerung mit der DV sehr leise auch dadurch, weil keine Ventile für Pauf und Pab angesteuert werden müssen. Geräuschverursachende Ventil- und Pumpenansteuerungen des ESP-Aggregats sind nicht erforderlich. Weiter kann diese Rekuperationssteuerung einheitlich für Front-, Heck- und Allradgetriebene Fahrzeuge und X-und II-Bremskreisaufteilungen verwendet werden. Die Pedalcharakteristik bleibt unverändert.

### Fahrerassistenzfunktionen

Es gibt viele Fahrerassistenzfunktionen, die automatische Bremseingriffe benötigen. So z.B.
- ACC (Adaptive Cruise Control) bei der die gewünschte Fahrzeugverzögerung durch einen aktiven Bremseingriff eingestellt wird
- AWB (Automatic Warning Brake) bei der ein Bremsimpuls den eingeschlafenen Fahrer wecken sollte
- BDW (Brake Disc Wiping) bei der ein sehr kleiner Bremsdruck in den Radzylindern bei Regen den Wasserfilm von den Bremsscheiben wischen sollte, damit bei einer nachfolgenden Bremsung sofort die maximale Bremswirkung erreicht wird

Bei diesen Assistenzfunktionen kann die Druckversorgung DV den notwendigen Bremsdruck in den Radzylindern erzeugen. Der Sollbremsdruck wird von den verschiedenen Fahrerassistenzsystemen vorgegeben. Bei der ACC ist der Soll-Bremsdruck variabel und hängt von der erforderlichen Fahrzeugverzögerung ab, während bei der BDW der Solldruck einen kleinen Wert hat (z.B. 1-3bar). Wie bei der Rekuperation wird der Bremsdruck durch eine entsprechende Bewegung des DV-Kolbens erzeugt, wobei auch hier der Drucksensor des ESP für die Rückkoppelung der Kolbenbewegung verwendet wird. Wie bei der Rekuperation ist durch eine genaue Positionsregelung des DV-Kolbens die Bremsdruckeinstellung sehr genau. Weiter ist auch bei den Fahrerassistenzsystemen die Drucksteuerung mit der Druckversorgung DV sehr leise.

Insbesondere in der Figurenbeschreibung von Fig. 2 zeigen sich neben der Baulänge die entscheidenden Vorteile der Erfindung.

**Fig. 3** zeigt die Hauptkomponenten des x-Boost in einer räumlichen Darstellung mit:
- Pedalstößel 3
- Befestigungsflansch BF an der Stirnwand
- Erste Kolben-Zylinder-Einheit bzw.Hauptzylinder HZ mit Pedalinterface
- Vorteilhaft parallel zum Hauptzylinder angeordneter Motor 8 mit Gehäuse Druckversorgung I (DV) 25, (kann auch senkrecht zur Achse des HZ ausgerichtet sein
- Hydraulischer Steuer- und Regeleinheit HCU
- Elektronischer Steuer- und Regeleinheit ECU
- Vorratsbehälter VB
- Steckverbinder ST ist unterhalb des Vorratsbehälters VB und oberhalb von HZ und HCU angeordnet und nach innen zur Gerätemitte hin gerichtet, um ein seitliches Abziehen des zugehörigen Steckers zu ermöglichen.

### Bezugszeichenliste

- 1: Bremspedal
- 2a: Pedalwegsensoren Master
- 2b: Pedalwegsensoren Slave
- 3: Pedalstößel
- 7: Spindel (KGT), Trapezspindel
- 8: EC-Motor
- 10: Kolben (DV)
- 11: Druckraum bzw. Arbeitskammer der DV
- 12: SK-Kolben
- 12a: Rückstellfeder SK-Kolben
- 12d: Druckraum bzw. Arbeitskammer am Schwimmkolben SK (Rückseite)
- 14: Trennwand
- 16: Hilfskolben
- 16a: Stößel
- 18: Pedalrückstellfeder
- 25: DV-Gehäuse
- 27: Schnüffelloch
- 28: Saugventil
- 28a: Rückstellfeder
- 28c: Ventilteller
- 28b: T-Stößel des Ventiltellers
- 30: Anker
- 31: Spule
- 32: Hubmagnet
- BF: Befestigungsflansch für Stirnwand
- D: Blende zur Drosselung
- RV: Rückschlagventil am Hilfskolben-Schnüffelloch
- R: Rücklauf zum Vorratsbehälter VB
- KWS: Kraft-Weg-Sensor
- WA: (stromlos geschlossenes) Magnetventil
- TTL: Time to lock
- BK: Bremskreis
- DG: Druckgeber
- VF: (stromlos offenes) MagnetventilVB Vorratsbehälter
- AV: Auslassventil ABS
- EV: Einlassventil ABS
- R: Rücklaufleitung zum Vorratsbehälter VB
- ST: Steckverbinder
- WS: Wegsimulator
- HZ: Hauptzylinder
- PD1: Stromlos geschlossenes Magnetventil zum DV-Arbeitsraum

## Patentansprüche

1. Bremssystem mit
- einer Betätigungseinrichtung,
- einer ersten Kolben-Zylinder-Einheit mit einem ersten Kolben (16) und einem zweiten Kolben (SK), um über eine Ventileinrichtung (VK) mindestens einen ersten Bremskreis (BK1) und mindestens einen zweiten Bremskreis (BK2) mit Druckmittel zu beaufschlagen, wobei der erste Kolben (16) mittels der Betätigungseinrichtung betätigbar ist, wobei die erste Kolben-Zylinder-Einheit einen ersten Druck- bzw. Arbeitsraum aufweist, in dem der erste Kolben (SK) angeordnet ist und an den zumindest der zweite Bremskreis (BK2) angeschlossen ist,
wobei die erste Kolben-Zylinder-Einheit einen zweiten Druck- bzw. Arbeitsraum aufweist, an den zumindest der erste Bremskreis (BK1) angeschlossen ist,
- einer zweiten Kolben-Zylinder-Einheit (DV) mit einem elektromotorischen Antrieb, einem Getriebe und zumindest einem Kolben, um zumindest einem der Bremskreise über eine Ventileinrichtung (FV) Druckmittel zuzuführen,
- einer Motor-Pumpen-Einheit mit Ventileinrichtung (ABS/ESP-Einheit), um den Bremskreisen Druckmittel zuzuführen,
- ein hydraulischer Wegsimulator (WS), der mit einem der Druck- bzw. Arbeitsräume der ersten Kolben-Zylinder-Einheit verbunden ist,
**dadurch gekennzeichnet, dass**
- der Druck- bzw. Arbeitsraum der zweiten Kolben-Zylinder-Einheit mit dem ersten Bremskreis (BK1) über eine hydraulische Leitung in Verbindung ist und über den ersten Kolben (SK) der zweite Bremskreis (BK2) mit Druck versorgt wird,
wobei die zweite Kolben-Zylinder-Einheit (DV) parallel zur Achse der ersten Kolben-Zylinder-Einheit ausgerichtet ist und
- wobei die zweite Kolben-Zylinder-Einheit (DV) in einem bestimmten Druckbereich wirksam ist und dass für einen weiteren, höheren Druckbereich die Motor-Pumpen-Einheit (ABS/ESP-Einheit) zur Druckerzeugung verwendet wird.

2. Bremssystem nach Anspruch 1, **dadurch gekennzeichnet, dass** das Bremssystem für ein Nachfördern von Volumen aus einem Vorratsbehälter (VB) beim Kolbenrückhub der zweiten Kolben-Zylinder-Einheit über ein Saugventil (28) ausgebildet ist, wobei das Saugventil (28) sowie ein Schnüffelloch der zweiten Kolben-Zylinder-Einheit über einen Rücklauf mit dem Vorratsbehälter (VB) in Verbindung steht.

3. Bremssystem nach Anspruch 1 oder 2, **dadurch gekennzeichnet, dass** die erste Kolben-Zylinder-Einheit eine Trennwand mit Dichtung für einen durchgreifenden Stössel (16a) aufweist, zur Bildung eines dritten Druck- bzw. Arbeitsraumes, in dem der erste Kolben (16) angeordnet ist, der insbesondere über eine Ventileinrichtung (FV) mit einem Bremskreis (BK1) verbunden ist.

4. Bremssystem nach Anspruch 3, **dadurch gekennzeichnet, dass** der Stössel (16a) bei Ausfall des ersten Bremskreises (BK1) die Kraft des Bremspedals auf den zweiten Kolben (SK) überträgt und damit Druck im zweiten Bremskreis (BK2) erzeugt.

5. Bremssystem nach Anspruch 4, **dadurch gekennzeichnet, dass** der Stössel (16a) eine signifikant kleinere Querschnittsfläche als die Kolben der ersten Kolben-Zylinder-Einheit aufweist, insbesondere um einen Faktor 5 kleinere Querschnittsfläche, und unwesentlich zum Druckaufbau beiträgt und zur Drucksensierung im Bremskreis dient und der Stößel eine Kraft auf das Bremspedal überträgt und somit eine haptische Rückmeldung auf das Bremspedal insbesondere beim ABS-Betrieb und/oder Fading erzeugt.

6. Bremssystem nach einem der vorhergehenden Ansprüche, **dadurch gekennzeichnet, dass** mittels einer Steuerungseinrichtung ein Motor des elektromotorischen Antriebes der zweiten Kolben-Zylinder-Einheit (DV) und ein Motor der Motor-Pumpen-Einheit (ABS/ESP-Einheit) gemeinsam oder unabhängig voneinander nutzbar sind.

7. Bremssystem nach einem der vorhergehenden Ansprüche, **dadurch gekennzeichnet, dass** bei Ausfall der Motor-Pumpen-Einheit (ABS/ESP) eine ABS-Funktion durch eine Kolbensteuerung der zweiten Kolben-Zylinder-Einheit (DV) zusammen mit Druckregelventilen der Motor-Pumpen-Einheit (ABS/ESP-Einheit) ausgeführt wird.

8. Bremssystem nach einem der vorhergehenden Ansprüche, **dadurch gekennzeichnet, dass** die Steuerung der zweiten Kolben-Zylinder-Einheit (ABS/ESP-Einheit) über den Pedalweg und den Druck mittels entsprechender Bremskraftverstärker (BKV)-Kennlinie erfolgt, wobei anstelle des Druckes der Motorstrom zur Regelung der zweiten Kolben-Zylinder-Einheit, insbesondere schnellen Vorsteuerung verwendet wird.

9. Bremssystem nach einem der vorhergehenden Ansprüche, **dadurch gekennzeichnet, dass** zur Steuerung der zweiten Kolben-Zylinder-Einheit sowie zur Diagnose eine Druck-Volumen-Kennlinie verwendet wird, wobei das Bremssystem dazu ausgebildet ist, einen Ausfall eines der Bremskreise (BK1, BK1) durch ein Vergleichen von Druck-Volumen-Kennlinien zu erkennen, wobei die Druck-Volumen-Kennlinie in Abständen im Rahmen eines Diagnosezyklus in einem Kennfeld abgelegt wird.

10. Bremssystem nach einem der vorhergehenden Ansprüche,
**dadurch gekennzeichnet, dass** der erste Kolben (16) und der zweite Kolben (SK) der ersten Kolben-Zylinder-Einheit unterschiedliche Durchmesser aufweisen.

11. Bremssystem nach einem der vorhergehenden Ansprüche,
**dadurch gekennzeichnet, dass** ein Modul einer 2-Box an eine 12V-Batterie bzw. 12-V-Spannungsnetz und das andere Modul an ein DC/DC-Wandler bzw. 48V-Bordnetz bzw. andere Bordnetz mit höherer Spannung angeschlossen ist, wobei insbesondere der X-Boost vom DC/DC-Wandler bzw. vom 48V-Bordnetz versorgt wird.

12. Bremssystem nach Anspruch 11, **dadurch gekennzeichnet, dass** beide Module jeweils redundant an beide Bordnetze insbesondere 12V-Batterie und DC/DC-Wandler angeschlossen werden.

13. Bremssystem nach einem der vorhergehenden Ansprüche,
**dadurch gekennzeichnet, dass**
für eine Rekuperations-Steuerung ein 4-Rad-Blending erfolgt, wobei eine Drucksteuerung über einen DV-Kolben bei offenen Ventilen der Ventileinrichtung der Motor-Pumpen-Einheit erfolgt und/oder, dass das Getriebe eine Trapezspindel mit Selbsthemmung aufweist, mit einer selbsthemmenden Wirkung bei Ausfall des Antriebes.

14. Bremssystem nach einem der vorhergehenden Ansprüche,
**dadurch gekennzeichnet, dass** eine Steckverbindung (ST) für das Bremssystem unterhalb eines/des Vorratsbehälters (VB) angeordnet ist und nach innen zu einerGerätemitte hin gerichtet ist, um ein seitliches Abziehen eines zugehörigen Steckers zu ermöglichen.

15. Bremssystem nach einem der vorhergehenden Ansprüche,
**dadurch gekennzeichnet, dass**
der zweite Kolben (SK, 12) der ersten Kolben-Zylinder-Einheit neben einem mit zwei Dichtungen (D4, D5) versehenen Durchgang in Form eines/des Schnüffelloch eine zu einem/dem Vorratsbehälter (VB) führenden Leitung einen weiteren Durchgang aufweist, der mit einer weiteren Dichtung (D4r) versehen ist und der insbesondere über eine Drossel (D) mit der zum Vorratsbehälter führenden Leitung verbunden ist.

## Claims

1. Brake system, comprising:
- an actuating device, in particular a brake pedal,
- a first piston-cylinder unit with a first piston (16) and a second piston (SK), for supplying pressure medium via a valve device to at least a first brake circuit (BK1) and at least a second brake circuit (BK2), wherein the first piston (16) can be actuated by means of the actuating device, and wherein the first piston-cylinder unit has a first pressure chamber or a first working chamber in which the first piston (SK) is arranged and to which at least the second brake circuit is connected, and wherein the first piston-cylinder unit has a second pressure chamber or a second working chamber, to which at least the first brake circuit is connected,
- a second piston-cylinder unit (DV) with an electromotive drive, a transmission and at least one piston for supplying pressure medium to at least one of the brake circuits via a valve device (FV),
- a motor-pump unit, with valve device (ABS/ESP unit), to supply pressure medium to the brake circuits,
- a hydraulic travel simulator (WS) is connected to a pressure chamber or a working chamber of the first piston-cylinder unit
**characterized in that**
- the pressure chamber or working chamber of the second piston-cylinder unit is connected to the first brake circuit (BK1) through a hydraulic line and the second brake circuit (BK2) is supplied with pressure through the first piston (SK), wherein the second piston-cylinder unit (DV) is arranged parallel to the axis of the first piston-cylinder unit and
- wherein the second piston cylinder unit (DV) is effective in a determined pressure region and that in a further, higher pressure region the motor-pump unit (ABS/ESP-unit) is used to generate pressure.

2. Brake system according to claim 1, **characterized in that** the brake system is configured to replenish volume from a storage container (VB) during the return stroke of the second piston-cylinder unit via a suction valve (28), wherein the suction valve (28) as well as a breather hole of the second piston-cylinder unit are connected to the storage container (VB) via a return line.

3. Brake system according to claim 1 or 2, **characterized in that** the first piston-cylinder unit has a partition wall with a seal for a penetrating plunger (16a), for forming a third pressure chamber or a third working chamber, which is connected in particular via a valve device (FV) to a brake circuit (BK1).

4. Brake system according to claim 3, **characterized in that**, in the event of failure of the brake circuit (BK1), the plunger (16a) transmits the force of the brake pedal to the second piston (SK) and thus generates pressure in the second brake circuit (BK2).

5. Brake system according to claim 4, **characterized in that** the plunger (16a) has a significantly smaller cross-sectional area than the pistons of the first piston-cylinder unit, in particular a cross-sectional area smaller by a factor of 5, and contributes insignificantly to the pressure build-up and serves for pressure sensing in the brake circuit, and the plunger transmits a force to the brake pedal and thus generates a haptic feedback to the brake pedal, in particular during ABS operation and/or fading.

6. Brake system according to one of the preceding claims, **characterized in that** by means of a control device, the motor of the electromotive drive of the second piston-cylinder unit (DV) and the motor of the motor-pump unit (ABS/ESP) can be used together or independently of one another.

7. Brake system according to one of the preceding claims, **characterized in that** in the event of failure of the motor-pump unit (ABS/ESP), the ABS function is carried out by the piston control of the pressure supply unit (DV) together with pressure regulating valves of the motor-pump unit (ABS/ESP unit).

8. Brake system according to one of the preceding claims, **characterized in that** the control of the second piston-cylinder unit (ABS/ESP unit) is carried out via the pedal travel and the pressure by means of a corresponding brake booster (BKV) characteristic curve, wherein instead of the pressure, the motor current is used for regulating the pressure supply DV, in particular fast pilot control.

9. Brake system according to one of the preceding claims, **characterized in that** for the control of the second piston-cylinder unit, as well as diagnosis, the pressure-volume characteristic is used, wherein the brake system is configured to recognize the failure of one of the brake circuits (BK1, BK2) by a comparison of pressure-volume characteristic curve, wherein the pressure-volume characteristic curve is stored in a key field at intervals as part of a diagnostic cycle.

10. Brake system according to one of the preceding claims, **characterized in that** the first piston (16) and the second piston (SK) of the first piston-cylinder unit have different diameters.

11. Brake system according to one of the preceding claims, **characterized in that** one module of the two-box is connected to a 12V battery or 12V voltage network and the other module is connected to a DC/DC converter or 48V on-board network or other on-board network with a higher voltage, wherein in particular the X-Boost is supplied by the DC/DC converter or by the 48V on-board network.

12. Brake system according to claim 11, **characterized in that** both modules are each connected redundantly to both vehicle electrical systems, in particular a 12V battery and DC/DC converter.

13. Brake system according to one of the preceding claims **characterized in that**, a four-wheel blending is used for recuperation control, wherein pressure control takes place via the DV piston when the valves of the ESP unit are open and/or the transmission comprises a self-locking trapezoidal spindle having a self-locking action in the event of failure of the drive.

14. Brake system according to one of the preceding claims, **characterized in that** a plug connection (ST) for the system is arranged below the storage container (VB) and is directed inwards towards the center of the appliance in order to enable a lateral removal of the associated plug.

15. Brake system according to one of the preceding claims, **characterized in that** the second piston (SK, 12) of the first piston-cylinder unit (main cylinder) has, in addition to the passage taking the form of a/the breather hole, which is provided with two seals (D4, D5), of the line leading to the storage container (VB), a further passage which is provided with a further seal (D4r), and which is connected in particular via a throttle (D) to the line leading to the storage container.

## Revendications

1. Système de freinage comprenant
- un dispositif d'actionnement,
- une première unité piston-cylindre avec un premier piston (16) et un deuxième piston (SK), destinée à alimenter en fluide sous pression au moins un premier circuit de freinage (BK1) et au moins un deuxième circuit de freinage (BK2) par l'intermédiaire d'un dispositif à soupapes (VK), le premier piston (16) pouvant être actionné au moyen du dispositif d'actionnement, la première unité piston-cylindre présentant une première chambre de pression ou de travail dans laquelle est disposé le premier piston (SK) et à laquelle est raccordé au moins le deuxième circuit de freinage (BK2),
la première unité piston-cylindre présentant une deuxième chambre de pression ou de travail à laquelle est raccordé au moins le premier circuit de freinage (BK1),
- une deuxième unité piston-cylindre (DV) avec un entraînement par moteur électrique, une transmission et au moins un piston, destinée à amener du fluide sous pression à au moins l'un des circuits de freinage par l'intermédiaire d'un dispositif à soupapes (FV),
- une unité moteur-pompe avec dispositif à soupapes (unité ABS/ESP), destinée à amener du fluide sous pression aux circuits de freinage,
- un simulateur de course hydraulique (WS) qui est en communication avec l'une des chambres de pression ou de travail de la première unité piston-cylindre,
**caractérisé en ce que**
- la chambre de pression ou de travail de la deuxième unité piston-cylindre est en communication avec le premier circuit de freinage (BK1) par une conduite hydraulique et le deuxième circuit de freinage (BK2) est alimenté en pression par le premier piston (SK),
la deuxième unité piston-cylindre (DV) étant orientée parallèlement à l'axe de la première unité piston-cylindre et
- la deuxième unité piston-cylindre (DV) étant active dans une plage de pression déterminée et **en ce que**, pour une autre plage de pression plus élevée, l'unité moteur-pompe (unité ABS/ESP) est utilisée pour générer la pression.

2. Système de freinage selon la revendication 1, **caractérisé en ce que** le système de freinage est conçu pour une réalimentation en volume à partir d'un réservoir (VB) lors de la course de retour du piston de la deuxième unité piston-cylindre par l'intermédiaire d'une soupape d'aspiration (28), la soupape d'aspiration (28) ainsi qu'un trou de reniflage de la deuxième unité piston-cylindre étant en communication avec le réservoir (VB) par l'intermédiaire d'un retour.

3. Système de freinage selon la revendication 1 ou 2, **caractérisé en ce que** la première unité piston-cylindre présente une cloison avec joint d'étanchéité pour un poussoir traversant (16a), pour former une troisième chambre de pression ou de travail dans laquelle est disposé le premier piston (16), qui est relié à un circuit de freinage (BK1), en particulier par l'intermédiaire d'un dispositif à soupapes (FV) .

4. Système de freinage selon la revendication 3, **caractérisé en ce que** le poussoir (16a) transmet la force de la pédale de frein au deuxième piston (SK) en cas de défaillance du premier circuit de freinage (BK1) et génère ainsi une pression dans le deuxième circuit de freinage (BK2).

5. Système de freinage selon la revendication 4, **caractérisé en ce que** le poussoir (16a) présente une surface de section transversale significativement plus petite que les pistons de la première unité piston-cylindre, en particulier une surface de section transversale plus petite d'un facteur 5, et contribue de manière insignifiante à l'augmentation de pression et sert au dosage de pression dans le circuit de freinage, et le poussoir transmet une force à la pédale de frein, générant ainsi un retour haptique sur la pédale de frein, en particulier lors du fonctionnement de l'ABS et/ou de fading.

6. Système de freinage selon l'une des revendications précédentes, **caractérisé en ce qu'**un moteur de l'entraînement par moteur électrique de la deuxième unité piston-cylindre (DV) et un moteur de l'unité moteur-pompe (unité ABS/ESP) peuvent être utilisés conjointement ou indépendamment l'un de l'autre au moyen d'un dispositif de commande.

7. Système de freinage selon l'une des revendications précédentes, **caractérisé en ce que**, en cas de défaillance de l'unité moteur-pompe (ABS/ESP), une fonction ABS est exécutée par une commande de piston de la deuxième unité piston-cylindre (DV) conjointement avec des soupapes de régulation de pression de l'unité moteur-pompe (unité ABS/ESP).

8. Système de freinage selon l'une des revendications précédentes, **caractérisé en ce que** la commande de la deuxième unité piston-cylindre (unité ABS/ESP) s'effectue par la course de pédale et la pression au moyen d'une courbe caractéristique correspondante du servofrein (BKV), le courant de moteur étant utilisé à la place de la pression pour réguler la deuxième unité piston-cylindre, en particulier une commande pilote rapide.

9. Système de freinage selon l'une des revendications précédentes, **caractérisé en ce qu'**une courbe caractéristique pression-volume est utilisée pour la commande de la deuxième unité piston-cylindre ainsi que pour le diagnostic, le système de freinage étant conçu pour détecter une défaillance de l'un des circuits de freinage (BK1, BK1) par une comparaison de courbes caractéristiques pression-volume, la courbe caractéristique pression-volume étant enregistrée à intervalles réguliers dans un diagramme caractéristique dans le cadre d'un cycle de diagnostic.

10. Système de freinage selon l'une des revendications précédentes, **caractérisé en ce que** le premier piston (16) et le deuxième piston (SK) de la première unité piston-cylindre présentent des diamètres différents.

11. Système de freinage selon l'une des revendications précédentes, **caractérisé en ce qu'**un module d'une 2-box est raccordé à une batterie 12V ou à un réseau de tension 12V et l'autre module est raccordé à un convertisseur DC/DC ou à un réseau de bord 48V ou à un autre réseau de bord de tension supérieure, le X-Boost étant en particulier alimenté par le convertisseur DC/DC ou par le réseau de bord 48V.

12. Système de freinage selon la revendication 11, **caractérisé en ce que** les deux modules sont chacun raccordés de manière redondante aux deux réseaux de bord, en particulier à la batterie 12V et au convertisseur DC/DC.

13. Système de freinage selon l'une des revendications précédentes, **caractérisé en ce que**, pour une commande de récupération, on effectue une répartition sur 4 roues, une commande de pression étant effectuée par un piston DV lorsque les soupapes du dispositif à soupapes de l'unité moteur-pompe sont ouvertes et/ou **en ce que** la transmission présente une vis trapézoïdale avec autoblocage, avec un effet autobloquant en cas de défaillance de l'entraînement.

14. Système de freinage selon l'une des revendications précédentes, **caractérisé en ce qu'**une connexion enfichable (ST) pour le système de freinage est disposée sous un/le réservoir (VB) et est orientée vers l'intérieur en direction d'un centre d'appareil afin de permettre un retrait latéral d'un connecteur associé.

15. Système de freinage selon l'une des revendications précédentes, **caractérisé en ce que** le deuxième piston (SK, 12) de la première unité piston-cylindre présente, outre un passage sous la forme d'un/du trou de reniflage muni de deux joints d'étanchéité (D4, D5), une conduite menant à un/au réservoir (VB), un autre passage qui est muni d'un autre joint d'étanchéité (D4r) et qui est en particulier relié par l'intermédiaire d'un étranglement (D) à la conduite menant au réservoir.
